# EUROPEAN PATENT SPECIFICATION

(11) **EP 2 602 100 B1**
(45) Date of publication and mention of the grant of the patent: **04.01.2017**
(21) Application number: 11814453.4
(22) Date of filing: 20.07.2011
(51) Int. Cl.: B29D 30/42, B29C 65/18, B29C 65/78, B29C 65/56, B29C 65/00, B29L 30/00

(54) **APPARATUS FOR JOINING TIRE CONSTITUENT MEMBER AND METHOD FOR MANUFACTURING TIRE CONSTITUENT MEMBER**
VORRICHTUNG ZUM VERBINDEN EINES REIFENBESTANDTEILS UND VERFAHREN ZUR HERSTELLUNG EINES REIFENBESTANDTEILS
APPAREIL PERMETTANT DE RÉUNIR D'UN ÉLÉMENT CONSTITUANT DE PNEU ET PROCÉDÉ DE FABRICATION D'UN L'ÉLÉMENT CONSTITUANT DE PNEU

(30) Priority: 02.08.2010 JP 2010173432
(43) Date of publication of application: 12.06.2013
(73) Proprietor: Bridgestone Corporation, Tokyo 104-8340 (JP)
(72) Inventor: OGAWA, Yuichiro, Kodaira-shi Tokyo 187-8531 (JP); SUZUKI, Masaru, Kodaira-shi Tokyo 187-8531 (JP)
(74) Representative: Lamb, Martin John Carstairs
(86) International application number: PCT/JP2011/066438
(87) International publication number: WO 2012/017823

(56) References cited:
- EP-A2- 0 460 580
- JP-A- 2 253 932
- JP-A- 51 130 485
- JP-A- 2001 062 940
- JP-A- 2010 149 398
- US-A- 4 454 000

## Description

### Technical Field

The present invention relates to an apparatus for joining tire constituent member configured to bring end portions of tire constituent member into contact with each other and join them together and a method for manufacturing a tire constituent member in which the end portions are joined to each other.

### Background Art

A sheet-shaped tire constituent member is used for forming of an unvulcanized tire. For example, a carcass ply is wound around a forming drum and formed into a cylindrical shape. Moreover, after the carcass ply is wound around the forming drum, a leading end portion and a rear end portion of the carcass ply are brought into contact with each other and joined together. As an apparatus for joining the end portions of the tire constituent member together as above, an apparatus for joining the end portions to each other by a pair of joining rollers has been known. In the prior-art joining apparatus, the pair of joining rollers is made to roll along the end portions of the tire constituent member. The end portions of the tire constituent member are brought into contact with each other and joined together by the pair of joining rollers (See Patent Document 1).

Attention is drawn to the disclosures of EP0460580, US4454000, JP2010-149398 and JP253932.

Meanwhile, in a radial ply tire for an automobile, a carcass ply made of an organic fiber is used. The carcass ply is formed by covering textile made of an organic fiber (nylon, rayon, and polyester, for example) with rubber. The carcass ply made of an organic fiber cord is relatively thin and low in rigidity. Thus, the carcass ply cannot be easily joined by the above-described prior-art joining apparatus and might be caught by the rolling joining rollers.

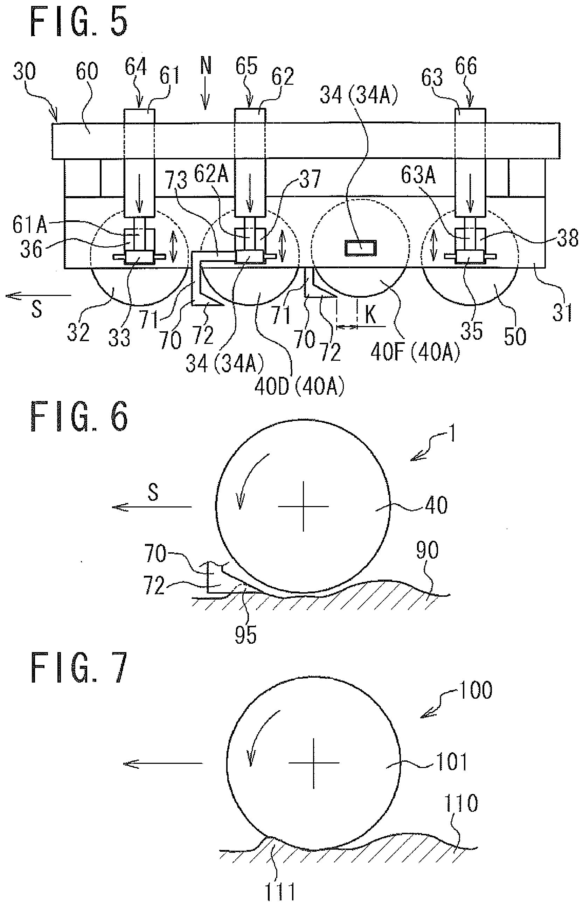

Fig. 7 is a diagram illustrating the prior-art joining apparatus for joining the carcass ply. In Fig. 7, a surface portion of a carcass ply 110 is illustrated in a section.

In a prior-art joining apparatus 100, a pair of joining rollers 101 (one side face is illustrated in Fig. 7) is rolled as illustrated in the figure. End portions of the carcass ply 110 are joined together by the joining rollers 101. At that time, on the surface of the carcass ply 110, a projecting portion 111 is strongly pressed onto the rolling joining rollers 101. As a result, the carcass ply 110 might be caught by the pair of joining rollers 101. It is also concerned that the carcass ply 110 is meshed between the pair of joining rollers 101.

Along with that movement, rubber of the carcass ply 110 is broken and the textile might be loosened. As a result, the organic fiber cord of the carcass ply 110 might be wound around the joining roller 101. In this case, the organic fiber cord needs to be removed manually from the joining roller 101. In accordance with a labor or time for removing the organic fiber, efficiency of the joining work is lowered. Moreover, in the prior-art joining apparatus 100, it is also concerned that an end portion of a tire constituent member might be caught by the joining roller 101 when the tire constituent member other than the carcass ply 110 is to be joined. Therefore, improvement is in demand from the viewpoint of improvement in the work efficiency and prevention of being caught.

### Prior-art Documents

### Patent Document

[Patent Document 1] Japanese Patent Laid-Open No. 56-19742

### Summary of Invention

### Problems to be Solved by the Invention

The present invention was made in view of the above-described prior-art problems and has an object to prevent end portions of a tire constituent member to be joined from being caught by a pair of joining rollers when the end portions to be joined are brought into contact with each other and joined together, and to improve efficiency of a joining work.

### Means for Solving the Problems

The present invention relates to an apparatus for joining a tire constituent member according to claim 1, which joins end portions of the tire constituent member formed of rubber, the apparatus including: a pair of joining rollers for bringing the end portions into contact with each other and joining them together by rolling on each of the opposing end portions of the tire constituent member; and an entanglement preventing member for preventing entanglement of the both end portions into the pair of joining rollers by pressing the both end portions of the tire constituent member in front of the joining rollers in a moving direction while moving along with the pair of joining rollers, wherein the entanglement preventing member presses the both end portions of the tire constituent member along the outer periphery of the pair of joining rollers.

Moreover, the present invention relates to a method for manufacturing a tire constituent member according to claim 7, which joins end portions of a tire constituent member formed of rubber so as to manufacture the joined tire constituent member, the method including the steps of: pressing the both end portions of the tire constituent member in front of a pair of joining rollers in a moving direction along the outer periphery of the pair of joining rollers to prevent entanglement of the both end portions into the pair of joining rollers; and rolling the pair of joining rollers on each of the opposing end portions of the tire constituent member and of bringing the end portions into contact with each other and joining them together.

### Advantages of the Invention

According to the present invention, when the end portions of the tire constituent member are brought into contact with each other and joined together, the end portions to be joined can be prevented from being caught by the pair of joining rollers. Moreover, efficiency of the joining work can be improved.

### Brief Description of the Drawings

[Fig. 1] Fig. 1 is a front view illustrating an apparatus for joining a tire constituent member of the present embodiment.
[Fig. 2] Fig. 2 is a plan view of a joining unit.
[Fig. 3] Fig. 3 is a front view of one joining roller when seen from the outside in a radial direction.
[Fig. 4A] Fig. 4A is a schematic diagram illustrating a vicinity of a joint portion of the tire constituent member.
[Fig. 4B] Fig. 4B is a schematic diagram illustrating a vicinity of a joint portion of the tire constituent member.
[Fig. 5] Fig. 5 is a side view illustrating an essential portion of the joining unit.
[Fig. 6] Fig. 6 is a diagram illustrating a state where end portions of the tire constituent member are joined by a pair of joining rollers.
[Fig. 7] Fig. 7 is a diagram illustrating a prior-art joining apparatus for joining a carcass ply.

### Description of Embodiments

An embodiment of an apparatus for joining a tire constituent member (hereinafter referred to as a joining apparatus) and a method for manufacturing a tire constituent member of the present invention will be described below by referring to the attached drawings.

The tire constituent member is a member for forming each part of a tire. The joining apparatus of the present embodiment brings end portions of the tire constituent member formed of rubber into contact with each other and joins them together. As a result, the tire constituent member (joint tire constituent member) in which the end portions are joined is manufactured.

The tire constituent member to be joined may be a member made only of unvulcanized rubber or may be a member made of unvulcanized rubber and a cord (a carcass ply, a belt, and a reinforcing member, for example). The tire constituent member is formed of rubber into a sheet shape. Moreover, the tire constituent member is formed by cutting or the like into a predetermined shape. The joining apparatus brings end portions of one or a plurality of tire constituent members into contact with each other and joins them together by means of pressure bonding over the whole end portions. In the following, a carcass ply used in a radial ply tire (PSR) for an automobile will be explained as an example of the tire constituent member. In this tire constituent member (carcass ply), an organic fiber cord is provided. The tire constituent member is wound around an outer periphery of a forming drum in a forming process of an unvulcanized tire. Both end portions (leading and rear end portions) of the tire constituent member are brought into contact with each other and joined together, and the tire constituent member is formed into a cylindrical shape.

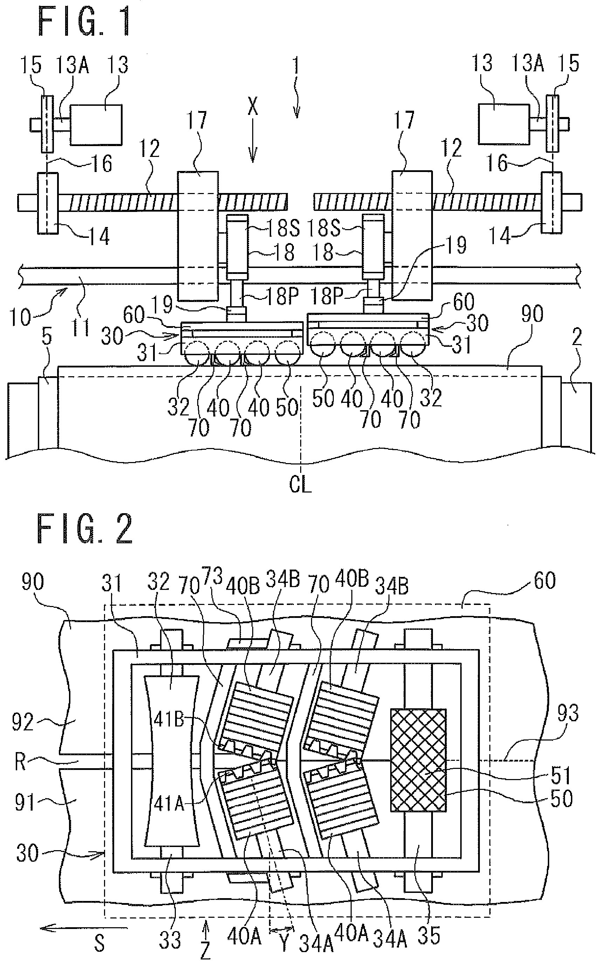

Fig. 1 is a front view illustrating an outline configuration of the joining apparatus. In Fig. 1, an essential part of the joining apparatus is illustrated.

A joining apparatus 1 includes, as illustrated in the figure, a forming drum 2 and a pair of joining units 30 for joining a tire constituent member 90. The pair of joining units 30 is juxtaposed in an axial direction of the forming drum 2. The joining apparatus 1 includes moving means (moving mechanism) 10 arranged along the outer peripheral surface of the forming drum 2. The moving means 10 moves the pair of joining units 30 in the axial direction and the radial direction (right-and-left direction and vertical direction in Fig. 1) of the forming drum 2. The moving means 10 is arranged above the forming drum 2.

The forming drum 2 has a cylindrical shape and rotates around the axis. The outer periphery of the forming drum 2 is expanded and contracted by a bladder or the like provided on the outer periphery. The forming drum 2 is a supporting body for supporting a tire constituent member 90 to be joined during forming of the unvulcanized tire. The tire constituent member 90 is wound once at a predetermined position of the outer periphery of the forming drum 2. The forming drum 2 holds the cylindrical tire constituent member 90 concentrically. Moreover, the forming drum 2 is supported by a driving device (not shown) so that the axis becomes horizontal. The driving device includes a driving source (a motor, for example) and a transmission mechanism for transmitting a rotation power of the driving source to the forming drum 2. The forming drum 2 is driven to rotate by the driving device and rotates the tire constituent member 90 at a predetermined rotation speed. The forming drum 2 stops the tire constituent member 90 at an arbitrary rotation angle.

The tire constituent member 90 is supplied froma supplying device (not shown). The tire constituent member 90 is wound around the outer periphery of the forming drum 2 or the forming drum 2 on which another member is arranged. Here, before the tire constituent member 90 is wound, an inner liner 5 is arranged on the outer periphery of the forming drum 2. A leading end portion and a rear end portion of the tire constituent member 90 are arranged at a predetermined interval and adjacent to each other. The leading end portion and the rear end portion of the tire constituent member 90 are portions which become a leading end and a rear end when being wound and oppose each other with a slight gap opened between them in a parallel state. The tire constituent member 90 is formed by covering an organic fiber cord (not shown) with unvulcanized rubber. In the rubber on the surface of the tire constituent member 90, a plurality of the organic fiber cords is arranged in the axial direction of the forming drum 2. The joining apparatus 1 supports the both end portions to be joined of the tire constituent member 90 opposed to each other by the forming drum 2. The joining apparatus 1 joins the end portions to each other by moving the joining unit 30 along the end portions of the tire constituent member 90 on the forming drum 2. The joining apparatus 1 is configured left-right symmetrically with respect to a center part CL in the axial direction of the forming drum 2. In the following, one side (the left side in Fig. 1) of the center part CL of the joining apparatus 1 will be mainly described.

The moving means 10 has a guide rail 11, a screw shaft 12, a motor 13, and a frame to which they are attached (not shown) . The guide rail 11 is arranged in parallel with the axis of the forming drum 2. The screw shaft 12 is arranged above the guide rail 11 and in parallel with the guide rail 11. A rotation shaft 13A of the motor 13 is arranged in parallel with the screw shaft 12. The screw shaft 12 is supported rotatably by the frame. To the screw shaft 12, a driven pulley 14 is fixed. A driving pulley 15 is fixed to the rotation shaft 13A of the motor 13. An endless belt 16 is spanned around the driven pulley 14 and the driving pulley 15. The moving means 10 transmits the rotation power of the motor 13 to the screw shaft 12 by the driving pulley 15, the belt 16, and the driven pulley 14. As a result, the screw shaft 12 is rotated at a predetermined speed in both directions around the axis.

The moving means 10 has a movable member 17, a piston-cylinder mechanism 18, and an oscillating mechanism 19. The movable member 17 is attached to the screw shaft 12. The piston-cylinder mechanism 18 is fixed to a side face of the movable member 17. The oscillating mechanism 19 is attached to a leading end (lower end) of a piston rod 18P. The joining unit 30 is attached to the oscillating mechanism 19. The movable member 17 has a screw hole through which the screw shaft 12 penetrates and a guide hole through which the guide rail 11 penetrates. The movable member 17 is guided by the guide rail 11 through the rotation of the above-described screw shaft 12 and moves at a predetermined speed in the axial direction of the forming drum 2. The piston rod 18P of the piston-cylinder mechanism 18 is arranged in the radial direction of the forming drum 2 and toward the axis of the forming drum 2. The piston-cylinder mechanism 18 moves the oscillating mechanism 19 by moving the piston rod 18P in and outside a cylinder 18S. As a result, the joining unit 30 gets close to the tire constituent member 90 or is spaced away from the tire constituent member 90. Moreover, the moving means 10 presses the joining unit 30 to the end portion of the tire constituent member 90 to be joined with a predetermined pressure. The moving means 10 rotates the screw shaft 12 by the motor 13 and moves the joining unit 30 along the end portion of the tire constituent member 90.

The joining unit 30 includes, as will be described later, a pressing roller 32, a pair of joining rollers 40, a reinforcing roller 50, and an entanglement preventing member 70. The moving means 10 presses the rollers 32, 40 and 50 and the entanglement preventing member 70 to the end portion of the tire constituent member 90 together with the joining unit 30 and moves them along the end portion. The rollers 32, 40, and 50 roll along the end portion of the tire constituent member 90. The joining unit 30 has a fixing member 60 and a frame body 31. The fixing member 60 is fixed to the oscillating mechanism 19. The frame body 31 is attached to the lower face of the fixing member 60 and is arranged along the outer periphery of the tire constituent member 90. The fixing member 60 and the frame body 31 are moved integrally by the moving means 10. The joining unit 30 joins the end portions of the tire constituent member 90 by the rollers 32, 40, and 50 provided on the frame body 31 and the entanglement preventing member 70. By means of oscillation at a micro angle of the oscillating mechanism 19, an arrangement angle of the joining unit 30 is changed. As a result, the joining unit 30 presses the tire constituent member 90 in a normal direction.

Fig. 2 is a plan view of the joining unit 30 during joining. In Fig. 2, the essential part of the joining unit 30 is illustrated when seen from an arrow X direction in Fig. 1. In the joining unit 30 illustrated in Fig. 2, a configuration on the frame body 31 side is illustrated by seeing through the fixing member 60 (indicated by a dotted line in Fig. 2). Fig. 2 illustrates also the tire constituent member 90 close to the joining unit 30. In Fig. 2, the both end portions 91 and 92 of the tire constituent member 90 before joining are illustrated on the left side. A slight gap R is provided between the both end portions 91 and 92. In Fig. 2, a joint portion 93 of the tire constituent member 90 is illustrated on the right side. The joint portion 93 is a portion joined by movement of the joining unit 30.

The joining unit 30 has, as illustrated in the figure, the pair of joining rollers 40 (40A and 40B), the entanglement preventing member 70, the pressing roller 32, and the reinforcing roller 50. The pair of joining rollers 40 is provided at least one pair in the joining unit 30. The entanglement preventing member 70 prevents the tire constituent member 90 from being caught by the pair of joining rollers 40.

The pressing roller 32, the pair of joining rollers 40, and the reinforcing roller 50 are arranged in a moving direction S (joining direction) of the joining unit 30. The moving direction S is a direction in which the joining unit 30 moves during joining of the tire constituent member 90. The pressing roller 32, the pair of joining rollers 40, and the reinforcing roller 50 are arranged in order from the front to the rear in the moving direction S. The pressing roller 32 and the reinforcing roller 50 are arranged in the front and the rear in the moving direction S with respect to the joining rollers 40. The joining rollers 40 are sandwiched between the pressing roller 32 and the reinforcing roller 50. The rollers 32, 40, and 50 are arranged in the frame body 31 and are supported rotatably around the axis by shaft members 33, 34, and 35, respectively. The shaft members 33, 34, and 35 are attached to the frame body 31 and support the rollers 32, 40, and 50 through bearings (not shown). The joining unit 30 has a plurality of (here, two) pairs of the joining rollers 40 in the moving direction S. Moreover, in the front of the moving direction S of all the pairs of the joining rollers 40, the entanglement preventing member 70 is provided, respectively. The entanglement preventing member 70 is arranged between the joining roller 40 and the pressing roller 32 and also between the front and rear joining rollers 40.

The outer peripheral surface of the pressing roller 32 is formed having a drum shape with a recess curve. The axial direction of the pressing roller 32 is arranged in a direction orthogonal to the axial direction of the forming drum 2. In that state, the pressing roller 32 is supported by the shaft member 33. The pressing roller 32 is pressed onto the both end portions 91 and 92 of the tire constituent member 90 together with the joining roller 40. In a contact range of the pressing roller 32, the end portions 91 and 92 are sandwiched between the pressing roller 32 and the forming drum 2. The pressing roller 32 presses the end portions 91 and 92. At that time, the pressing roller 32 presses the tire constituent member 90 with a relatively low pressure. As a result, floating of the end portions 91 and 92 is prevented. The pressing roller 32 and the joining roller 40 roll on the end portions 91 and 92 of the tire constituent member 90. The joining unit 30 presses the both end portions 91 and 92 by the pressing roller 32 and sequentially joins the end portions 91 and 92 by the pair of joining rollers 40.

Each of the pair of joining rollers 40 forms a cylindrical shape. One end portions of the pair of joining rollers 40 are supported by the respective shaft members 34 (34A and 34B). The pair of joining rollers 40 is arranged symmetrically with respect to the joint portion 93 of the tire constituent member 90. The axes of the pair of joining rollers 40 are arranged so as to incline to the rear in the moving direction S (right side in Fig. 2) toward the outside from the joint portion 93 side (inside), respectively. In this joining roller 40, an angle Y of the axis forms a relatively small predetermined angle (an angle of 5 to 30°, for example). The angle Y is an angle of the axis with respect to the direction orthogonal to the joint portion 93. In the pair of joining rollers 40, an intersection of the both axes is located on the joint portion 93. The pair of joining rollers 40 have a plurality of projections 41 (41A and 41B) projecting in the axial direction, respectively, on the edge portions opposing each other. The projections 41 are formed at equal intervals along the edge portions of the pair of joining rollers 40. In the pair of joining rollers 40, the projections 41 and recesses between the projections 41 are provided alternately in the peripheral direction and at the same pitch. The projections 41 and the recesses are arranged alternately in the peripheral direction of the pair of joining rollers 40. The projections 41 on one of the joining rollers 40 enter between the projections 41 (recesses) of the other joining roller 40. The pair of joining rollers 40 rotates in synchronization at an equal speed by meshing of the projections 41 with each other.

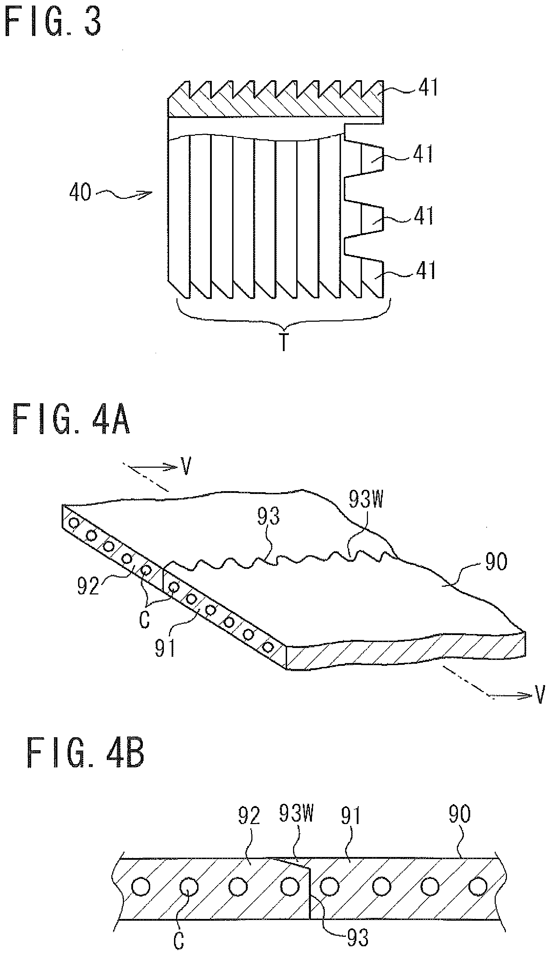

Fig. 3 is a front view of one joining roller 40 when seen from the outside in the radial direction. In Fig. 3, a part of the joining roller 40 (upper part in Figure) is illustrated in a section.

On the joining roller 40, projecting rims T are formed as illustrated in the figure. The projecting rims T are formed annularly (or helically) extending in the peripheral direction of the joining roller 40. The projecting rims T are formed in plural by being juxtaposed on the outer periphery of the joining roller 40. The sectional shape of the joining roller 40 is formed having a serrated shape in which a plurality of projecting portions is juxtaposed. In this projecting rim T, a side face on the projection 41 side is orthogonal to the axial direction of the joining roller 40, while the side face on the other side is inclined at a predetermined angle. The projecting rim T is formed having a triangular section and is arranged on the whole of the outer periphery of the joining roller 40 including the projection 41. The projecting rim T is pressed onto the end portions 91 and 92 of the tire constituent member 90. The joining roller 40 presses predetermined ranges of the end portions 91 and 92 by the projecting rim T.

The joining apparatus 1 moves the joining unit 30 by the moving means 10 (See Fig. 1). Moreover, the apparatus presses the pressing roller 32 (See Fig. 2) to the both end portions 91 and 92 of the tire constituent member 90 by the moving means 10. The joining apparatus 1 presses the joining rollers 40A and 40B to the end portions 91 and 92, respectively. The joining rollers 40A and 40B are pressed symmetrically with respect to the gap R. In that state, the joining unit 30 is moved in the moving direction S along the end portions 91 and 92. As a result, the joining rollers 40A and 40B inclined in the opposite direction are made to roll on each of the end portions 91 and 92 in synchronization.

Along with rolling of the joining rollers 40A and 40B, a force is applied to the tire constituent member 90 from the projecting rims T of the joining rollers 40A and 40B. To the tire constituent member 90, a force in a direction orthogonal to the projecting rims T, for example, is applied. As described above, the force in the direction to get close to each other acts on the end portions 91 and 92 of the tire constituent member 90. By means of this force, the both end portions 91 and 92 are drawn to each other and brought into contact with each other while eliminating the gap R. The end faces of the end portions 91 and 92 are pressure-bonded by the pressure applied from the joining rollers 40A and 40B. At the same time, a force acts alternately to the end portions 91 and 92 from the projections 41A and 41B of the joining rollers 40A and 40B meshed with each other. The surfaces of the end portions 91 and 92 are deformed alternately to the other side and spliced. As a result, the end portions 91 and 92 are joined together.

Figs. 4A and 4B are schematic diagrams illustrating the vicinity of the joint portion 93 of the tire constituent member 90 after the joining. Fig. 4A is a perspective view of the joint portion 93, and Fig. 4B is a V-V line sectional view on arrow of Fig. 4A.

As illustrated in the figures, the tire constituent member 90 has a plurality of organic fiber cords C. By joining of the end portions 91 and 92, rubber 93W on the surface side (upper side in Figs. 4A and 4B) is partially stretched by the projections 41A and 41B. The rubber 93W is stretched alternately to the surfaces of the end portions 91 and 92. The joint portion 93 is pressure-bonded linearly inside (lower side in Figs. 4A and 4B). On the other hand, the joint portion 93 is joined in a wavy state on the surface side. The end portions 91 and 92 on the surface side alternately overlap the surface on the other side.

As described above, the joining apparatus 1 presses the pair of joining rollers 40 (See Fig. 2) to each of the end portions 91 and 92 of the tire constituent member 90 to be joined by sandwiching the gap R. Moreover, the pair of joining rollers 40 is made to roll on each of the opposing end portions 91 and 92 of the tire constituent member 90, respectively. Along with this rolling, the pair of joining rollers 40 brings the end portions 91 and 92 (both end faces) into contact with each other while drawing the both end portions 91 and 92 to each other and joins them together. The tire constituent member 90 is continuously joined and formed into a cylindrical shape. At that time, the joining apparatus 1 rolls the two pairs of front and rear joining rollers 40 in conjunction by the moving means 10. Since the two pairs of joining rollers 40 continuously perform the similar joining operation, the end portions 91 and 92 are joined strongly.

The joining apparatus 1 presses the joint portion 93 of the tire constituent member 90 by the reinforcing roller 50 (See Fig. 2) subsequently to the joining by the joining rollers 40. The reinforcing roller 50 is formed into a columnar shape and is supported by the shaft member 35. The reinforcing roller 50 is pressed onto the both end portions 91 and 92 of the tire constituent member 90 together with the pressing roller 32 and the pair of joining rollers 40. The reinforcing roller 50 rolls in the moving direction S consecutively to the rear of the pair of joining rollers 40 along with movement of the joining unit 30. The reinforcing roller 50 reinforces the joint between the end portions 91 and 92 by pressing the both end portions 91 and 92 joined together.

On an outer peripheral surface 51 of the reinforcing roller 50, a plurality of inclined recess grooves is provided crossing by knurling. The outer peripheral surface 51 of the reinforcing roller 50 is formed of a plurality of the recess grooves into a coarse surface (irregular surface) with a large friction force with rubber. The reinforcing roller 50 presses the both end portions 91 and 92 (joint portion 93) of the joined tire constituent member 90 by the outer peripheral surface 51 during rolling. At the same time, the reinforcing roller 50 frictions the both end portions 91 and 92 brought into contact with each other by the outer peripheral surface 51. By means of the pressing force of the reinforcing roller 50, the both end portions 91 and 92 of the tire constituent member 90 are deformed so as to mutually swell toward the other side. As a result, the both end portions 91 and 92 are pressure-bonded more strongly. At the same time, the reinforcing roller 50 sequentially reinforces joint between the end portions 91 and 92 by grinding a joint interface between the both end portions 91 and 92 by the outer peripheral surface 51. As a result, the end portions 91 and 92 are firmly joined together.

The joining apparatus 1 includes heating means (not shown) for heating the reinforcing roller 50 from inside (or outside) . The joining apparatus 1 heats the outer peripheral surface 51 of the reinforcing roller 50 by the heating means to a predetermined temperature (70 to 100°C, here). The reinforcing roller 50 heats the both end portions 91 and 92 of the tire constituent member 90. As a result, the effect of reinforcing the joint by the reinforcing roller 50 is improved. The end portions 91 and 92 are joined together with high joint strength more firmly.

Subsequently, a configuration provided on a side portion of the joining unit 30 will be described. Moreover, a configuration provided on the fixing member 60 will be also described. However, the joining unit 30 is configured similarly on the both sides of the rollers 32, 40, and 50. Thus, in the following, only one side portion (lower part in Fig. 2) of the joining unit 30 will be explained as an example.

Fig. 5 is a side view illustrating the essential part of the joining unit 30. In Fig. 5, the joining unit 30 is illustrated when seen from an arrow Z direction in Fig. 2. The joining unit 30 illustrated in Fig. 5 is in a state that the rollers 32, 40, and 50 are spaced from the tire constituent member 90.

The shaft members 33, 34, and 35 of the rollers 32, 40 and 50 have, as illustrated in the figure, a square rod shape having a rectangular section and penetrate the side face of the frame body 31. The shaft members 33, 34, and 35 protrude toward the outside (front side in Fig. 5) from inside of the frame body 31. In the pair of joining rollers 40 located on the rear side in the moving direction S (hereinafter referred to as a fixed joining roller 40F), the shaft member 34 is fixed in the through hole of the frame body 31. Thus, the fixed joining roller 40F moves integrally with the frame body 31.

In the joining roller 40 located on the front side (hereinafter referred to as a displacement joining roller 40D), the pressing roller 32, and the reinforcing roller 50, the shaft members 33, 34, and 35 are inserted into guide holes 36, 37, and 38. The guide holes 36, 37, and 38 have rectangular shapes and penetrate the side face of the frame body 31. The shaft members 33, 34, and 35 are guided by the guide holes 36, 37, and 38 and displaced in the longitudinal direction (vertical direction in Fig. 5) in the guide holes 36, 37, and 38. Moreover, the shaft members 33, 34, and 35 are locked in the guide holes 36, 37, and 38. The shaft members 33, 34, and 35 are displaced in the guide holes 36, 37, and 38 without changing attitudes and protruding lengths from the frame body 31. The shaft members 33, 34, and 35 are pressed in one direction (downward direction in Fig. 5) in displacement directions by pressure means 61, 62, and 63. The pressure means 61, 62, and 63 are fixed to the side part of the fixing member 60 and press the portions of the shaft members 33, 34, and 35 protruded from the frame body 31.

Each of the pressure means 61, 62, and 63 is formed of a plunger or an elastic member (spring or the like), for example. The plunger presses a pin-shaped pressurizing member toward the outside by a spring inside. Here, each of the pressure means 61, 62, and 63 is made of a plunger and arranged on the fixing member 60 while being faced downward. The pressure means 61, 62, and 63 apply a downward pressure to the shaft members 33, 34, and 35 all the time by pressuring members 61A, 62A, and 63A. As a result, the shaft members 33, 34, and 35 are located at the lowermost side in the guide holes 36, 37, and 38. The pressure means 61, 62, and 63 press the shaft members 33, 34, and 35 with a force weaker than the force of the moving means 10 pressing the rollers 32, 40 and 50 onto the tire constituent member 90. If the rollers 32, 40D, and 50 are pressed onto the tire constituent member 90, the pressure means 61, 62, and 63 displace the shaft members 33, 34, and 35 in the guide holes 36, 37, and 38 upward. The pressure means 61, 62, and 63 displace the shaft members 33, 34, and 35 in the guide holes 36, 37, and 38 and displace the rollers 32, 40D, and 50. The rollers 32, 40D and 50 displace on the basis of the fixed joining roller 40F pressed by the moving means 10 onto the tire constituent member 90. The pressure means 61, 62, and 63 displace the rollers 32, 40D, and 50 in accordance with the irregularity on the surface of the tire constituent member 90 on the basis of the fixed joining roller 40F.

As described above, the pressure means 61, 62, and 63 displace the rolling rollers 32, 40D, and 50 while pressing them onto the end portions 91 and 92 of the tire constituent member 90. The pressure means 61, 62, and 63 displace the rollers 32, 40D, and 50 so as to follow the irregularities of the end portions 91 and 92. Therefore, the pressure means 61, 62, and 63 configure the displacement means 64, 65, and 66 for displacing the rollers 32, 40D, and 50. By means of the displacement means 64, 65, and 66, the rollers 32, 40D, and 50 other than the fixed joining roller 40F are displaced while moving integrally with the frame body 31. The rollers 32, 40D and 50 are displaced independently from each other and also independently from the fixed joining roller 40F. The joining apparatus 1 displaces the pressing roller 32, the displacement joining roller 40D, and the reinforcing roller 50 in accordance with the irregularity of the tire constituent member 90 of the respective pressing positions by the displacement means 64, 65, and 66. As a result, the rollers 32, 40, and 50 are made to follow the irregularities of the end portions 91 and 92. Moreover, the joining apparatus 1 makes the rollers 32, 40D, and 50 roll in a state in contact with the end portions 91 and 92 (pressed state).

The pair of fixed joining rollers 40F is arranged in a state spaced from the end portions 91 and 92 of the tire constituent member 90 with a shift from the other rollers 32, 40D and 50. The pair of fixed joining rollers 40F is arranged with a shift to the opposite side (upper side in Fig. 5) in the pressing direction by the moving means 10. Thus, the fixed joining roller 40F is brought into contact with the end portions 91 and 92 after the other rollers 32, 40D, and 50 are displaced in contact with the end portions 91 and 92 by pressing of the moving means 10. Moreover, the fixed joining roller 40F is pressed onto the end portions 91 and 92 with a relatively strong force by the pressure of the moving means 10.

The other rollers 32, 40D, and 50 are pressed onto the end portions 91 and 92 of the tire constituent member 90 with a relatively weak force in accordance with the pressure by the pressure means 61, 62, and 63. At that time, since it is only necessary for the pressing roller 32 to press the end portions 91 and 92 and to prevent floating, it is pressed with a relatively weak force. The displacement joining roller 40D is pressed with a relatively weak force so that the end portions 91 and 92 can be brought close without close contact with the members on the lower side. The reinforcing roller 50 is pressed with a relatively strong force in order to reinforce reliably the joint between the end portions 91 and 92. In accordance with the respective pressing forces, the pressure of each of the pressure means 61, 62, and 63 is set.

The joining apparatus 1 of the present embodiment includes the above-described entanglement preventing member 70 in the joining unit 30. The entanglement preventing member 70 is arranged in the front of each of the pair of joining rollers 40 in the moving direction S. The entanglement preventing member 70 moves integrally with the joining unit 30 while pressing the end portions 91 and 92 of the tire constituent member 90. The entanglement preventing member 70 prevents the end portions 91 and 92 from being caught between the rolling pair of joining rollers 40 or by the joining roller 40. Moreover, the entanglement preventing member 70 also prevents the tire constituent member 90 from being caught by the projections 41 between the pair of joining rollers 40.

The entanglement preventing member 70 is formed of a plate-shaped member formed into a predetermined shape and arranged from the frame body 31 while being faced downward. The entanglement preventing member 70 has a base portion 71 on the frame body 31 side and a pressing portion 72 for pressing the both end portions 91 and 92 of the tire constituent member 90. The pressing portion 72 has a triangular section and is arranged rearward in the moving direction S from the lower end of the base portion 71. Moreover, the pressing portion 72 is arranged along the outer periphery of the joining roller 40. The lower end face (pressing face) of the pressing portion 72 is pressed onto the tire constituent member 90. The lower end face of the pressing portion 72 is formed into a smooth planar shape and is arranged in conforming to the lower end of the joining roller 40.

The entanglement preventing member 70 is bent in an opposite direction at the center part in the longitudinal direction (See Fig. 2) and is arranged in parallel with the pair of joining rollers 40. The entanglement preventing member 70 is arranged on the entirety in the front of the joining roller 40 in the moving direction S. The pressing portion 72 (See Fig. 5) is formed over the lower end of the entanglement preventing member 70. The pressing portion 72 is arranged in the front of the pair of joining rollers 40 in the moving direction S and also is arranged close to the pair of joining rollers 40. Between the pressing portion 72 and the outer periphery of the joining roller 40, a gap having a predetermined interval is opened. In that state, the pressing portion 72 is arranged along the outer periphery of the joining roller 40. The pressing portion 72 is pressed onto the tire constituent member 90 together with the pair of joining rollers 40. The entanglement preventing member 70 presses the both end portions 91 and 92 of the tire constituent member 90 along the outer periphery of the pair of joining rollers 40 by the pressing portion 72.

Here, one (front of the displacement joining roller 40D) of the entanglement preventing members 70 has a connection piece 73 continuing to the base portion 71. The connection piece 73 is attached to the shaft member 34 of the displacement joining roller 40D on the side of the frame body 31. Thus, the one entanglement preventing member 70 is displaced integrally with the displacement joining roller 40D. The other (front of the fixed joining roller 40F) entanglement preventing member 70 has the base portion 71 fixed to the frame body 31. Thus, the other entanglement preventing member 70 has a fixed position in the joining unit 30 similarly to the fixed joining roller 40F. As described above, regarding the entanglement preventing member 70, the positional relationship with the pair of joining rollers 40 combined with each other is maintained. The entanglement preventing member 70 is in contact with the tire constituent member 90 together with the joining roller 40 in the front of the joining roller 40 in the moving direction S.

The pressing portion 72 of the entanglement preventing member 70 is arranged so as to overlap the portion (lower portion in Fig. 5) opposing the tire constituent member 90 of the pair of joining rollers 40. That is, the pressing portion 72 is arranged between the pair of joining rollers 40 and the tire constituent member 90 and enters a gap between the pair of joining rollers 40 and the tire constituent member 90. When seen from a normal direction (an arrow N direction in Fig. 5) of the tire constituent member 90, the pressing portion 72 hides in the pair of joining rollers 40. Moreover, the pressing portion 72 of the entanglement preventing member 70 is arranged in the vicinity in the front of the pair of joining rollers 40 in the moving direction S. Assume that a distance in the moving direction S from the outer periphery of the joining roller 40 to the pressing portion 72 is K. The vicinity in the vicinity in the front means that K is within 5 mm and a position where the pressing portion 72 is not in contact with the joining roller 40. Here, the pressing portion 72 is arranged so that a gap (distance K) between the pressing portion 72 and the joining roller 40 is approximately 1 mm.

Fig. 6 is a diagram illustrating a state where the end portions 91 and 92 of the tire constituent member 90 are joined together by the pair of joining rollers 40. In Fig. 6, the one joining roller 40 and the pressing portion 72 of the entanglement preventingmember 70 are illustrated in a side view schematically. The surface portion of the tire constituent member 90 is illustrated in a sectional view.

The entanglement preventing member 70 has, as described above, the pressing portion 72 for pressing the both end portions 91 and 92 of the tire constituent member 90 in the vicinity in the front in the moving direction S of the pair of joining rollers 40. The entanglement preventing member 70 presses the both end portions 91 and 92 of the tire constituent member 90 to be joined by the joining roller 40 by the pressing portion 72 before they are brought into contact with the joining roller 40. The entanglement preventing member 70 presses the floating of the end portions 91 and 92 or a projecting portion 95 on the surface and levels the end portions 91 and 92. The entanglement preventing member 70 brings the both end portions 91 and 92 into contact with the pair of joining rollers 40 in a relatively flat state.

The pair of joining rollers 40 rolls on the end portions 91 and 92 subsequently to the entanglement preventing member 70 and sequentially joins the end portions 91 and 92 together. At that time, the pair of joining rollers 40 rolls without catching the tire constituent member 90. The projecting portion 95 is not caught between the projections 41 of the pair of joining rollers 40, either. As described above, the entanglement preventing member 70 presses the both end portions 91 and 92 of the tire constituent member 90 in the front in the moving direction S (advance direction) of the joining roller 40 while moving with the pair of joining rollers 40. As a result, the entanglement preventing member 70 prevents jamming of the both end portions 91 and 92 into the pair of joining rollers 40 during joining of the tire constituent member 90.

Subsequently, a procedure of joining the end portions 91 and 92 of the tire constituent member 90 formed of rubber together by the joining apparatus 1 will be described. Moreover, a manufacturing method of manufacturing the joined tire constituent member 90 by joining the end portions 91 and 92 together will be described. The following procedure and operations are executed under control of a controller (not shown) provided in the joining apparatus 1. The controller is composed of a computer, for example. The controller is connected to each part in the apparatus through connecting means. The controller controls each part in the apparatus so as to perform an operation for joining.

If the tire constituent member 90 (See Fig. 1) is to be joined, first, a cylindrical member (the inner liner 5 and the like) is arranged on the outer periphery of the forming drum 2. After that, the tire constituent member 90 is wound once around the outer periphery of the rotating forming drum 2. The both end portions 91 and 92 of the tire constituent member 90 are arranged at pressing positions of the joining unit 30 by the moving means 10. The forming drum 2 supports the end portions 91 and 92 by opposing them each other. Subsequently, the joining apparatus 1 lowers one of the joining units 30 (left one in Fig. 1) in the center part CL of the forming drum 2 by the moving means 10. Moreover, the joining apparatus 1 presses the rollers 32, 40, and 50 and the entanglement preventing member 70 onto the end portions 91 and 92 (See Fig. 2) with a predetermined pressure.

Subsequently, the joining unit 30 is moved to the outside in the axial direction of the forming drum 2. The rollers 32, 40, and 50 and the entanglement preventing member 70 move integrally along the end portions 91 and 92 of the tire constituent member 90. As a result, the pressing roller 32 and the pair of joining rollers 40 are made to roll in the moving direction S on each of the opposing end portions 91 and 92 of the tire constituent member 90 to be joined. By means of the pair of joining rollers 40, the both end portions 91 and 92 are brought close to each other and the end portions 91 and 92 are brought into contact with each other and joined together. At the same time, by means of the entanglement preventing member 70, the both end portions 91 and 92 of the tire constituent member 90 in the front in the moving direction S of the pair of joining rollers 40 are pressed, and jamming of the both end portions 91 and 92 into the pair of joining rollers 40 is prevented. At that time, the entanglement preventing member 70 presses the tire constituent member 90 located in the vicinity in the front in the moving direction S of the pair of joining rollers 40 by the pressing portion 72. Moreover, the pressing portion 72 presses the both end portions 91 and 92 of the tire constituent member 90 along the outer peripheries of the pair of joining rollers 40.

The joining apparatus 1 also makes the heated reinforcing roller 50 roll. The both end portions 91 and 92 brought into contact with each other are heated and pressed by the reinforcing roller 50, and the joint between the end portions 91 and 92 is reinforced as described above. Subsequently, the joining apparatus 1 lowers the other (right one in Fig. 1) joining unit 30 in the center part CL of the forming drum 2 when one of the joining units 30 has moved a predetermined distance. The joining apparatus 1 presses the rollers 32, 40, and 50 onto the joined end portions 91 and 92. Subsequently, the pair of joining units 30 is moved in the opposite directions. The pair of joining units 30 is moved at the same speed toward the outside in the axial direction of the forming drum 2. As a result, the rollers 32, 40, and 50 are made to roll along the end portions 91 and 92, and the end portions 91 and 92 are joined to each other over the entirety. After that, another tire constituent member is arranged on the joined tire constituent member 90 so as to form an unvulcanized tire having a predetermined shape and structure. The unvulcanized tire is vulcanized and molded so as to manufacture various types of tires.

As described above, in this joining apparatus 1, the both end portions 91 and 92 of the tire constituent member 90 are pressed by the entanglement preventing member 70. By means of the entanglement preventing member 70, the end portions 91 and 92 are prevented from being caught by the pair of joining rollers 40. Particularly, even the tire constituent member 90 which is relatively thin and low in rigidity (a carcass ply having an organic fiber cord C, for example) can be reliably prevented from being wound around the joining roller 40 and being caught between the pair of joining rollers 40. Thus, rubber of the tire constituent member 90 is not broken or the textile is not unwound. The organic fiber cord C is not wound around the joining roller 40. As a result, a high quality can be ensured for the tire constituent member 90 after being joined. Since the work of removing the organic fiber cord C from the joining roller 40 is no longer needed, joining of the tire constituent member 90 can be performed continuously. As a result, labor and time during joining are reduced, and efficiency of the joining work can be improved.

Therefore, according to the present embodiment, when the end portions 91 and 92 of the tire constituent member 90 are to be brought into contact with each other and joined together, the end portions 91 and 92 to be joined can be prevented from being caught by the pair of joining rollers 40. Moreover, the efficiency of the joining work can be improved. The both end portions 91 and 92 are pressed by entanglement preventing member 70, and the end portions 91 and 92 are joined together by the pair of joining rollers 40. Thus, the end portions 91 and 92 can be joined together uniformly and with accuracy. Even in the thin tire constituent member 90, the end portions 91 and 92 can be joined together with sufficient strength. By pressing the both end portions 91 and 92 in the vicinity in the front in the moving direction S of the joining roller 40 by the pressing portion 72 of the entanglement preventing member 70, the both end portions 91 and 92 can be pressed at appropriate and close positions with respect to the joining roller 40 during the joining operation. As a result, the end portions 91 and 92 can be prevented from being caught by the pair of joining rollers 40 more reliably. The joining accuracy between the end portions 91 and 92 can be also improved further.

Here, if rigidity of the tire constituent member 90 is low, it becomes difficult to linearly arrange the end portions 91 and 92 of the tire constituent member 90 on the outer periphery of the forming drum 2. Even if the end portions 91 and 92 cannot be accurately arranged as above, the both end portions 91 and 92 are pressed in advance by the entanglement preventing member 70 and the end portions 91 and 92 are brought into contact with the pair of joining rollers 40 in a state where the positions and shapes are equalized. Thus, the states of the end portions 91 and 92 to be joined are maintained equally, and the end portions 91 and 92 can be reliably joined together by the pair of joining rollers 40. Moreover, since an area in which the pair of joining rollers 40 are in contact with the tire constituent member 90 can be sufficiently ensured, an influence of fluctuation of the end portions 91 and 92 becomes difficult to affect. Therefore, the tire constituent member 90 can be appropriately joined.

In this joining apparatus 1, the end portions 91 and 92 of the tire constituent member 90 can be reliably joined by the joining unit 30 even on the forming drum 2. Thus, the joining apparatus 1 is suitable for joining the tire constituent member 90 wound around the forming drum 2. When the joining apparatus 1 is to be used on the forming drum 2, a great effect can be obtained. Even if the tire constituent member 90 is a carcass ply of a type other than the above or a member other than the carcass ply, by using the joining apparatus 1, the end portions 91 and 92 can be reliably joined together without being caught by the pair of joining rollers 40.

If the both end portions 91 and 92 of the tire constituent member 90 are to be pressed along the outer peripheries of the pair of joining rollers 40 by the entanglement preventing member 70, the end portions 91 and 92 can be reliably pressed before they are brought into contact with the joining rollers 40. Moreover, since the same degree of jamming preventing effect can be obtained over the entire range where the entanglement preventing member 70 presses, jamming of the end portions 91 and 92 by the joining roller 40 can be prevented more reliably. At that time, the entanglement preventingmember 70 is preferably arranged in parallel with the joining roller 40. However, if a gap having a predetermined interval can be ensured between the entanglement preventing member 70 and the joining roller 40, the entanglement preventing member 70 does not have to be made parallel with the joining roller 40.

In the present embodiment, two pairs of joining rollers 40 are arranged in the front and rear, but one pair or three pairs or more of the joining rollers 40 can be provided. If a plurality of pairs of the joining rollers 40 is to be assembled in the moving direction S, the end portions 91 and 92 of the tire constituent member 90 can be joined reliably and firmly. Moreover, if a plurality of pairs of the joining rollers 40 is to be provided, it is preferable to provide the entanglement preventing member 70 in each in the front in the moving direction S of all the pairs of the joining rollers 40. By configuring as above, the end portions 91 and 92 can be pressed in the front of each pair of the joining rollers 40, and the jamming of the end portions 91 and 92 can be prevented more reliably. At the same time, each of the above-described effects by the entanglement preventing member 70 can be obtained for each pair of the joining rollers 40. However, since the pair of joining rollers 40 located in the most front in the moving direction S performs the joining operation of the end portions 91 and 92 first, necessity of pressing the both end portions 91 and 92 by the entanglement preventing member 70 is the largest. Thus, for the plurality of pairs of joining rollers 40, the entanglement preventing member 70 may be provided at least in the pair of joining rollers 40 located in the most front in the moving direction S.

By configuring the entanglement preventing member 70 by a plate-shaped member, machining of the entanglement preventing member 70 is facilitated. With the plate-shaped entanglement preventing member 70, the both end portions 91 and 92 can be reliably pressed, and damage on the rubber on the surface can be also suppressed. On the other hand, the entanglement preventing member 70 can be also formed of another member which can prevent jamming of the end portions 91 and 92 into the joining roller 40. The entanglement preventing member 70 can be also formed of a comb-like member, a small-diameter roller or a thick linear member other than the plate-shaped member.

The example of joining the tire constituent member 90 on the forming drum 2 has been described. On the other hand, by using the joining apparatus 1, the tire constituent member 90 can be similarly joined on a supporting body other than the forming drum 2. For example, by means of the joining apparatus 1, the tire constituent member 90 can be joined also on a planar-shaped support member or a conveyer, for example.

### Description of the Reference Symbols

- 1: joining apparatus of tire constituent member
- 2: forming drum
- 5: inner liner
- 10: moving means
- 11: guide rail
- 12: screw shaft
- 13: motor
- 14: driven pulley
- 15: driving pulley
- 16: belt
- 17: movable member
- 18: piston-cylinder mechanism
- 19: oscillating mechanism
- 30: joining unit
- 31: frame body
- 32: pressing roller
- 33, 34, 35: shaft member
- 36, 37, 38: guide hole
- 40: joining roller
- 41: projection
- 50: reinforcing roller
- 51: outer peripheral surface
- 60: fixing member
- 61, 62, 63: pressure means
- 64, 65, 66: displacement means
- 70: entanglement preventing member
- 71: base portion
- 72: pressing portion
- 73: connection piece
- 90: tire constituent member
- 91, 92: end portion
- 93: joint portion
- 95: projecting portion
- C: organic fiber cord
- CL: center part
- R: gap
- T: projecting rim

## Claims

1. An apparatus (1) for joining a tire constituent member (90), which joins end portions (91, 92) of the tire constituent member (90) formed of rubber, the apparatus (1) comprising:
a pair of joining rollers (40) for bringing the end portions (91, 92) into contact with each other and joining them together by rolling on each of the opposing end portions (91, 92) of the tire constituent member (90); and
an entanglement preventing member (70) for preventing entanglement of the both end portions (91, 92) into the pair of joining rollers (40) by pressing the both end portions (91, 92) of the tire constituent member (90) in front of the joining rollers (40) in a moving direction while moving along with the pair of joining rollers (40), **characterised in that**
the entanglement preventing member (70) presses the both end portions (91, 92) of the tire constituent member (90) along the outer periphery of the pair of joining rollers (40).

2. The apparatus (1) for joining a tire constituent member (90) according to claim 1, wherein
the entanglement preventing member (70) has a pressing portion (72) for pressing the both end portions (91, 92) of the tire constituent member (90); and
the pressing portion (72) of the entanglement preventing member (70) is arranged so as to overlap a portion of the pair of joining rollers (40) opposite to the tire constituent member (90).

3. The apparatus (1) for joining a tire constituent member (90) according to claim 1, wherein
the entanglement preventing member (70) has a pressing portion (72) for pressing the both end portions (91, 92) of the tire constituent member (90) in the vicinity in front of the pair of joining rollers (40) in the moving direction.

4. The apparatus (1) for joining a tire constituent member (90) according to any of claims 1 to 3, the apparatus (1) further comprising:
a reinforcing roller (50) for pressing the both end portions (91, 92) of the joined tire constituent member (90).

5. The apparatus (1) for joining a tire constituent member(90) according to any of claims 1 to 4, wherein
the entanglement preventing member (70) is formed of a plate-shaped member.

6. The apparatus (1) for joining a tire constituent member (90) according to any of claims 1 to 5, wherein
a plurality of pairs of joining rollers (40) is provided in a moving direction; and
the entanglement preventing member (70) is provided each in front of all the pairs of joining rollers (40) in the moving direction.

7. A method for manufacturing a tire constituent member (90), which joins end portions (91, 92) of a tire constituent member (90) formed of rubber so as to manufacture the joined tire constituent member (90), the method comprising the steps of:
pressing the both end portions (91, 92) of the tire constituent member (90) in front of a pair of joining rollers (40) in a moving direction along the outer periphery of the pair of joining rollers (40) to prevent entanglement of the both end portions (91, 92) into the pair of joining rollers (40); and
rolling the pair of joining rollers (40) on each of the opposing end portions (91, 92) of the tire constituent member (90) and of bringing the end portions (91, 92) into contact with each other and joining them together.

## Patentansprüche

1. Vorrichtung (1) zum Verbinden eines Reifenbestandteils (90), die Endabschnitte (91 92) des aus Gummi geformten Reifenbestandteils (90) verbindet, wobei die Vorrichtung (1) Folgendes umfasst:
ein Paar von Verbindungswalzen (40), um die Endabschnitte (91, 92) in Berührung miteinander zu bringen und sie miteinander zu verbinden, durch das Walzen auf jedem der Endabschnitte (91, 92) des Reifenbestandteils (90), und
ein Einzugsverhinderungselement (70) zum Verhindern eines Einzugs der beiden Endabschnitte (91, 92) in das Paar von Verbindungswalzen (40) durch das Pressen der beiden Endabschnitte (91, 92) des Reifenbestandteils (90) vor den Verbindungswalzen (40) in einer Bewegungsrichtung, während sie sich zusammen mit dem Paar von Verbindungswalzen (40) bewegen, **dadurch gekennzeichnet, dass**
das Einzugsverhinderungselement (70) die beiden Endabschnitte (91, 92) des Reifenbestandteils (90) entlang des Außenumfangs des Paares von Verbindungswalzen (40) presst.

2. Vorrichtung (1) zum Verbinden eines Reifenbestandteils (90) nach Anspruch 1, wobei
das Einzugsverhinderungselement (70) einen Pressabschnitt (72) zum Pressen der beiden Endabschnitte (91 92) des Reifenbestandteils (90) hat und
der Pressabschnitt (72) des Einzugsverhinderungselements (70) so angeordnet ist, dass er einen Abschnitt des Paares von Verbindungswalzen (40), der dem Reifenbestandteil (90) gegenüberliegt, überlappt.

3. Vorrichtung (1) zum Verbinden eines Reifenbestandteils (90) nach Anspruch 1, wobei
das Einzugsverhinderungselement (70) einen Pressabschnitt (72) zum Pressen der beiden Endabschnitte (91, 92) des Reifenbestandteils (90) in der Nachbarschaft vor dem Paar von Verbindungswalzen (40) in der Bewegungsrichtung hat.

4. Vorrichtung (1) zum Verbinden eines Reifenbestandteils (90) nach einem der Ansprüche 1 bis 3, wobei die Vorrichtung (1) ferner Folgendes umfasst:
eine Verstärkungswalze (50) zum Pressen der beiden Endabschnitte (91 92) des verbundenen Reifenbestandteils (90).

5. Vorrichtung (1) zum Verbinden eines Reifenbestandteils (90) nach einem der Ansprüche 1 bis 4, wobei
das Einzugsverhinderungselement (70) aus einem plattenförmigen Element geformt ist.

6. Vorrichtung (1) zum Verbinden eines Reifenbestandteils (90) nach einem der Ansprüche 1 bis 5, wobei
mehrere Paare von Verbindungswalzen (40) in einer Bewegungsrichtung bereitgestellt werden und
das Einzugsverhinderungselement (70) jeweils vor allen Paaren von Verbindungswalzen (40) in der Bewegungsrichtung bereitgestellt wird.

7. Verfahren zum Fertigen eines Reifenbestandteils (90), das Endabschnitte (91, 92) eines aus Gummi geformten Reifenbestandteils (90) verbindet, um so den verbundenen Reifenbestandteil (90) zu fertigen, wobei das Verfahren die folgenden Schritte umfasst:
das Pressen der beiden Endabschnitte (91 92) des Reifenbestandteils (90) vor einem Paar von Verbindungswalzen (40) in einer Bewegungsrichtung entlang des Außenumfangs des Paares von Verbindungswalzen (40), um einen Einzug der beiden Endabschnitte (91, 92) in das Paar von Verbindungswalzen (40) zu verhindern, und
das Walzen des Paares von Verbindungswalzen (40) auf jedem der entgegengesetzten Endabschnitte (91, 92) des Reifenbestandteils (90), und die Endabschnitte (91 92) in Berührung miteinander zu bringen und sie miteinander zu verbinden.

## Revendications

1. Appareil (1) pour relier un élément constitutif d'un bandage pneumatique (90), reliant des parties d'extrémité (91, 92) de l'élément constitutif du bandage pneumatique (90) composées de caoutchouc, l'appareil (1) comprenant :
une paire de rouleaux de liaison (40) pour mettre en contact les parties d'extrémité (91, 92) l'une avec l'autre et les relier l'une à l'autre en roulant sur chacune des parties d'extrémité opposées (91, 92) de l'élément constitutif du bandage pneumatique (90) ; et
un élément empêchant un enchevêtrement (70) pour empêcher un enchevêtrement des deux parties d'extrémité (91, 92) dans la paire de rouleaux de liaison (40), en exerçant une pression sur les deux parties d'extrémité (91, 92) de l'élément constitutif du bandage pneumatique (90) en face des rouleaux de liaison (40) dans une direction de déplacement, pendant le déplacement avec la paire de rouleaux de liaison (40), **caractérisé en ce que** :
l'élément empêchant un enchevêtrement (70) presse les deux parties d'extrémité (91, 92) de l'élément constitutif du bandage pneumatique (90) le long de la périphérie externe de la paire de rouleaux de liaison (40).

2. Appareil (1) pour relier un élément constitutif d'un bandage pneumatique (90) selon la revendication 1, dans lequel :
l'élément empêchant un enchevêtrement (70) comporte une partie de pression (72) pour exercer une pression sur les deux parties d'extrémité (91, 92) de l'élément constitutif du bandage pneumatique (90) ; et
la partie de pression (73) de l'élément empêchant un enchevêtrement (70) est agencé de sorte à chevaucher une partie de la paire de rouleaux de liaison (40) opposée à l'élément constitutif du bandage pneumatique (90).

3. Appareil (1) pour relier un élément constitutif d'un bandage pneumatique (90) selon la revendication 1, dans lequel :
l'élément empêchant un enchevêtrement (70) comporte une partie de pression (72) pour exercer une pression sur les deux parties d'extrémité (91, 92) de l'élément constitutif du bandage pneumatique (90) au voisinage et en face de la paire de rouleaux de liaison (40), dans la direction de déplacement.

4. Appareil (1) pour relier un élément constitutif d'un bandage pneumatique (90) selon l'une quelconque des revendications 1 à 3, l'appareil (1) comprenant en outre :
un rouleau de renforcement (50) pour exercer une pression sur les deux parties d'extrémité (91, 92) de l'élément constitutif relié du bandage pneumatique (90)

5. Appareil (1) pour relier un élément constitutif d'un bandage pneumatique (90) selon l'une quelconque des revendications 1 à 4, dans lequel :
l'élément empêchant un enchevêtrement (70) est formé à partir d'un élément en forme de plaque.

6. Appareil (1) pour relier un élément constitutif d'un bandage pneumatique (90) selon l'une quelconque des revendications 1 à 5, dans lequel :
plusieurs paires de rouleaux de liaison (40) sont agencés dans une direction de déplacement ; et
l'élément empêchant un enchevêtrement (70) est agencé à chaque fois en face de toutes les paires de rouleaux de liaison (40) dans la direction de déplacement.

7. Procédé de fabrication d'un élément constitutif d'un bandage pneumatique (90), reliant des parties d'extrémité (91, 92) d'un élément constitutif du bandage pneumatique (90) composé de caoutchouc, de sorte à fabriquer l'élément constitutif relié du bandage pneumatique (90), le procédé comprenant les étapes ci-dessous :
pression des deux parties d'extrémité (91, 92) de l'élément constitutif du bandage pneumatique (90) en face d'une paire de rouleaux de liaison (40) dans une direction de déplacement le long de la périphérie externe de la paire de rouleaux de liaison (40) pour empêcher un enchevêtrement des deux parties d'extrémité (91, 92) dans la paire de rouleaux de liaison (40) ; et
roulement de la paire de rouleaux de liaison (40) sur chacune des parties d'extrémité opposées (91, 92) de l'élément constitutif du bandage pneumatique (90) et mise en contact des parties d'extrémité (91, 92) l'une avec l'autre pour les relier l'une à l'autre.
